# EUROPÄISCHE PATENTSCHRIFT

(11) **EP 0 862 234 B1**
(45) Veröffentlichungstag und Bekanntmachung des Hinweises auf die Patenterteilung: **03.11.1999**
(21) Anmeldenummer: 98102188.4
(22) Anmeldetag: 09.02.1998
(51) Int. Cl.: H01M 8/06

(54) **Brennstoffzellen-Anlage mit Reformer und Kohlenmonoxyd-Sensor**
Fuel cell plant with reformer and carbon monoxide sensor
Système de piles à combustible avec dispositif de reformage et detecteur de monoxide de carbone

(30) Priorität: 27.02.1997 DE 19707814
(43) Veröffentlichungstag der Anmeldung: 02.09.1998
(73) Patentinhaber: DBB Fuel Cell Engines GmbH, 73230 Kirchheim/Teck-Nabern (DE)
(72) Erfinder: Walz, Hans Frieder, 73312 Geislingen (DE); zur Megede, Detlef, Dr., 89347 Bubesheim (DE)
(74) Vertreter: Kocher, Klaus-Peter

(56) Entgegenhaltungen:
- EP-A- 0 692 835
- EP-A- 0 710 835
- EP-A- 0 710 996
- GB-A- 2 250 130
- PATENT ABSTRACTS OF JAPAN vol. 008, no. 142 (E-254), 3.Juli 1984 & JP 59 051480 A (TOKYO SHIBAURA DENKI KK), 24.März 1984,
- HOHLEIN B ET AL: "Hydrogen from methanol for fuel cells in mobile systems: development of a compact reformer" JOURNAL OF POWER SOURCES, Bd. 1-2, Nr. 61, 8.Juli 1996, Seite 143-147 XP004071501

## Beschreibung

Die Erfindung bezieht sich auf eine Brennstoffzellen-Energieerzeugungsanlage nach dem Oberbegriff des Anspruchs 1. Derartige Anlagen werden beispielsweise zur Bereitstellung der elektrischen Energie in Elektrofahrzeugen verwendet. Bei einem der bekannten Anlagentypen wird in der Reformaterzeugungseinrichtung eine Heißdampfreformierung von Methanol durchgeführt, wobei Methanol und Wasser in flüssiger Form im Fahrzeug bevorratet werden können. Die Reformierungsreaktion wird so eingestellt, daß das erzeugte Gasgemisch, Reformat genannt, wasserstoffreich ist. Im Reformat enthaltenes Kohlenmonoxid ist unerwünscht, da es die Brennstoffzellen vergiftet, und wird daher üblicherweise in einer oder mehreren, dem Reformierungsreaktor nachgeschalteten Gasreinigungsstufen entfernt, z.B. durch partielle CO-Oxidation oder selektive Abtrennung des Kohlenmonoxids oder des Wasserstoffs. Als reformatqualitätsindikativer Sensor kommt z.B. ein Kohlenmonoxid-Sensor zum Einsatz, mit dem der Kohlenmonoxidgehalt im Reformat überwacht wird, um abhängig davon bestimmte Anlagensteuerungsmaßnahmen durchzuführen.

So ist in der Offenlegungsschrift GB 2 250 130 A eine Brennstoffzellen-Energieerzeugungsanlage der eingangs genannten Art beschrieben, bei der der Kohlenmonoxidgehalt des Reformats von einem an der Eingangsseite einer CO-Oxidationsstufe angeordneten CO-Sensor gemessen wird. Die damit erhaltene Information wird dort dazu benutzt, die Menge an in die CO-Oxidationsstufe eingeleitetem Sauerstoff auf ein stöchiometrisches Maß einzustellen, um dadurch stets eine vollständige CO-Oxidation sicherzustellen.

In der Offenlegungsschrift EP 0 710 996 A1 ist eine weitere Brennstoffzellen-Energieerzeugungsanlage der eingangs genannten Art beschrieben, wobei in unterschiedlichen Varianten entweder nur ein CO-Sensor an der Eintritts- oder Austrittsseite des dortigen Brennstoffzellenstapels oder zwei Sensoren unterschiedlicher Empfindlichkeiten seriell an der Eintrittsseite des Brennstoffzellenstapels angeordnet sind. In jedem Fall ist das jeweilige Ausgangssignal des oder der CO-Sensoren einer Steuereinheit zugeführt, die in Abhängigkeit davon den Betrieb bestimmter Einheiten der Reformaterzeugungseinrichtung steuert, speziell den Betrieb eines Reformierungsreaktors, eines CO-Konverters und einer Einheit zur Durchführung einer partiellen Oxidationsreaktion. Als Steuerungsmaßnahmen sind dort sowie in der Offenlegungsschrift EP 0 710 835 A2, die eine weitgehend ähnliche Anlage offenbart, insbesondere die Steuerung der in die partielle Oxidationseinheit eingeleiteten Luftmenge oder die Erhöhung der Reaktionstemperatur in dieser Einheit und/oder im Reformierungsreaktor oder die Steuerung der Reaktionstemperatur im CO-Konverter angegeben. In der letztgenannten Druckschrift werden verschiedene Ausführungen von CO-Sensoren beschrieben, insbesondere auch solche, welche die Struktur und Funktionsweise einer einzelnen Brennstoffzelle besitzen, an die ein konstanter elektrischer Verbraucher angeschlossen ist oder denen ein externer Potentiostatenschaltkreis mit Referenzelektrode zugeordnet ist.

In der JP-A-59051480 ist eine Reformer-Brennstoffzellenkombination zur Energieerzeugung offenbart, bei der die Reformatqualität mittels eines CO-Sensors überwacht wird. Bei Überschreiten einer zulässigen CO-Konzentration ist vorgesehen, das Reformat mittels eines sogen. Bypass-Ventils an den Brennstoffzellen vorbei zum Reformer rückzuführen und so die Brennstoffzellen vor Vergiftung zu schützen.

In der EP-A-0 692 835 ist offenbart, daß der Betrieb der Brennstoffzellenanlage zumindest vorübergehend gestoppt wird, wenn ein dem Reformer nachgeschalteter CO-Sensor eine unakzeptable Reformatqualität anzeigt.

Die oben genannten, herkömmlichen Anlagen haben die Eigenschaft, daß bei Detektieren eines zu hohen CO-Gehaltes im Reformat durch den jeweiligen CO-Sensor selbst dann, wenn der dadurch veranlaßte Steuerungseingriff in die Reformaterzeugungseinrichtung in deren völligem Abschalten besteht, noch für eine gewisse Zeitdauer restliches Reformat mit hohem CO-Gehalt in die Brennstoffzellenanordnung gelangt und dieses Kohlenmonoxid die Brennstoffzellenaktivität vermindern kann.

Der Erfindung liegt als technisches Problem die Bereitstellung einer Brennstoffzellen-Energieerzeugungsanlage der eingangs genannten Art zugrunde, die sehr rasch auf Störungen bei der Reformatbereitstellung reagiert und insbesondere verhindert, daß solche Störungen zu Schädigungen der Brennstoffzellenanordnung führen.

Die Erfindung löst dieses Problem durch die Bereitstellung einer Brennstoffzellen-Energieerzeugungsanlage mit den Merkmalen des Anspruchs 1.

Die Anlage besitzt ein von der Steuereinheit angesteuertes Zuluftregelventil in der Sauerstoffeinspeiseleitung für die Brennstoffzellenanordnung, mit dem die Luft- bzw. Sauerstoffzufuhr zur Brennstoffzellenanordnung abhängig von der sensorisch erfaßten Reformatqualität geregelt werden kann. Durch entsprechende Änderung der Sauerstoffzufuhr zur Brennstoffzellenanordnung können temporär höhere Kohlenmonoxid-Konzentrationen im Reformatgasstrom erlaubt werden, ohne daß dies zu Schädigungen der Brennstoffzellen führt.

Bei dieser Anlage ist in einer Weiterbildung nach Anspruch 2 zusätzlich ein von der Steuereinheit angesteuertes Ventil vorgesehen, mit dem die Einspeisung des von der Reformaterzeugungseinrichtung bereitgestellten Reformatgasstroms in die Brennstoffzellenanordnung abhängig von der sensorisch erfaßten Reformatqualität freigegeben oder unterbrochen wird. Die Unterbrechung kann beispielsweise darin bestehen, daß das Reformat über eine Zweigleitung abgeführt wird, z.B. in Form einer Bypassleitung um die Brennstoffzellenanordnung herum. Die im störungsfreien Anlagenbetrieb freigegebene Einspeisung des Reformats in die Brennstoffzellenanordnung kann somit bei Detektieren einer ungenügenden Reformatqualität, z.B. eines zu hohen CO-Gehaltes im Reformat, sofort durch entsprechende Ansteuerung des Ventils unterbrochen werden, so daß unverzüglich das Eindringen schädlicher Reformatbestandteile, wie eine zu hohe Kohlenmonoxidmenge, in die Brennstoffzellenanordnung unterbunden wird. Das selbst bei völliger Abschaltung der Reformaterzeugungseinrichtung noch für eine gewisse Zeitdauer abgegebene Reformat ungenügender Qualität gelangt nicht in die Brennstoffzellenanordnung, sondern wird anderweitig abgeführt. Eine Vergiftung der Brennstoffzellenanordnung z.B. durch zuviel Kohlenmonoxid läßt sich dadurch vermeiden.

Bei einer nach Anspruch 3 weitergebildeten Anlage ist jeweils ein reformatqualitätsindikativer Sensor an der Eintritts- und der Austrittsseite einer dem Reformierungsreaktor nachgeschalteten Reformatreinigungseinheit vorgesehen. Auf diese Weise wird die Reformatqualität an verschiedenen Stellen des Reformatstroms und damit sehr zuverlässig überwacht. Je näher der jeweilige Sensor vor der Brennstoffzellenanordnung positioniert ist, um so vollständiger überwacht er den Betrieb der gesamten Reformaterzeugungseinrichtung, während mit einem weiter von der Brennstoffzellenanordnung entfernt liegenden Sensor eine große Frühwarnzeit erzielt wird, wenn sich bereits dort eine ungenügende Reformatqualität aufgrund einer Betriebsstörung im stromaufwärts davon gelegenen Teil der Anlage ergibt.

Bei einer nach Anspruch 4 weitergebildeten Anlage hat der jeweilige Sensor die Struktur einer einzelnen einer Mehrzahl von Brennstoffzellen, welche die Brennstoffzellenanordnung bilden. Ein so aufgebauter Sensor besitzt die gleiche Anfälligkeit gegenüber Verschlechterungen der Reformatqualität, insbesondere auch hinsichtlich des CO-Gehalts im Reformat, wie die eigentliche Brennstoffzellenanordnung, er ist jedoch kleiner und kann selektiv und genauer überwacht werden, so daß von ihm Veränderungen im Reformat schneller detektiert werden können, als dies an der eigentlichen Brennstoffzellenanordnung möglich ist.

Bei einer nach Anspruch 5 weitergebildeten Anlage ist vor der Eintrittsseite des Reformierungsreaktors ein reformatqualitätisindikativer Sensor angeordnet, mit dem die Zusammensetzung des zu reformierenden Gasgemischs erfaßt wird. Mit diesem Sensor kann schon eine fehlerhafte Zusammensetzung des zu reformierenden Gasgemischs detektiert werden, so daß die Einspeisung von daraus erzeugtem Reformat ungenügender Qualität in die Brennstoffzellenanordnung sehr frühzeitig verhindert werden kann.

Bei einer nach Anspruch 6 weitergebildeten Anlage wird einem die Struktur einer einzelnen Brennstoffzelle der Brennstoffzellenanordnung aufweisenden, reformatqualitätsindikativen Sensor kathodenseitig ein sauerstoffhaltiger Gasstrom zugeführt, welcher einer Luft- bzw. Sauerstoffeinspeiseleitung der Brennstoffzellenanordnung entnommen ist. Damit vermag dieser Sensor gleichzeitig die Luft- bzw. Sauerstoffzufuhr zur Brennstoffzellenanordnung zu überwachen.

Eine vorteilhafte Ausführungsform der Erfindung ist in den Zeichnungen dargestellt und wird nachfolgend beschrieben. Hierbei zeigen:
- Fig. 1: ein Blockdiagramm einer Brennstoffzellen-Energieerzeugungsanlage mit mehreren reformatqualitätsindikativen Sensoren und
- Fig. 2: eine schematische Seitenansicht eines Typs der in Fig. 1 verwendeten Sensoren.

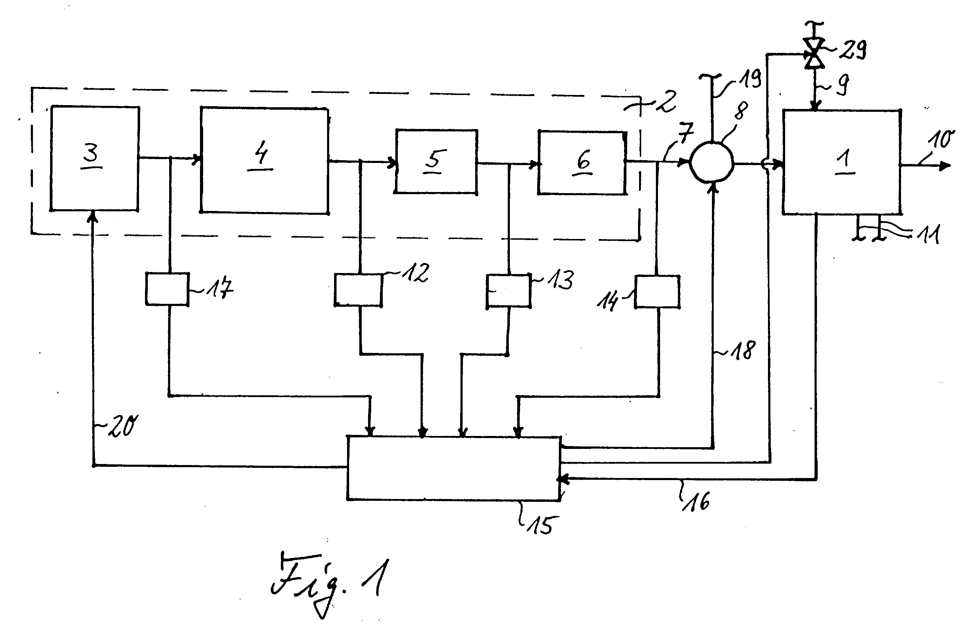

Die in Fig. 1 gezeigte Brennstoffzellen-Energieerzeugungsanlage beinhaltet eine Brennstoffzellenanordnung 1 üblicher Bauart, beispielsweise in Form eines sogenannten Brennstoffzellenstapels, dem als Brennstoff ein wasserstoffreiches Reformat zuführbar ist, das von einer Reformaterzeugungseinrichtung 2 mittels einer Heißdampfreformierung von Methanol erzeugt wird. Die Reformaterzeugungseinrichtung 2 beinhaltet hierzu eine eingangsseitige Bevorratungs- und Aufbereitungseinheit 3, die Methanol und Wasser in flüssiger Form bevorratet und diese beiden Komponenten zu einem heißen Gemisch aus Wasserdampf und Methanol aufbereitet. Dieses zu reagierende Gasgemisch wird einem Methanolreformierungsreaktor 4 zugeführt und dort in einem herkömmlichen Prozeß in ein wasserstoffreiches Reformat umgesetzt, das prozeßbedingt einen gewissen Anteil Kohlenmonoxid und gegebenenfalls bestimmte Restkohlenwasserstoffe enthält. Das Kohlenmonoxid sollte auf einen Anteil von weniger als etwa 50ppm reduziert werden, um Verluste in der Brennstoffzellenaktivität der Brennstoffzellenanordnung 1 zu verhindern. Ebenso ist der Gehalt an Restkohlenwasserstoffen, die einen eher langfristigen, dafür umso schädlicheren Einfluß auf die Brennstoffzellenanordnung 1 haben können, auf ein bestimmtes Maß zu beschränken. Um dies zu erreichen, ist dem Reformierungsreaktor 4 eine Reformatreinigungseinheit nachgeschaltet, die aus zwei seriell hintereinanderliegenden Reformatreinigungsstufen 5, 6 besteht. Der Aufbau der Gasreinigungsstufen 5, 6 ist ebenso wie derjenige des Reformierungsreaktors 4 und der Bevorratungs- und Aufbereitungseinheit 3 von irgendeiner der herkömmlichen, geeigneten Arten und bedarf daher keiner näheren Erläuterung. Das Kohlenmonoxid kann z.B. durch selektive Oxidation oder Methanisierung entfernt werden. Eine weitere Möglichkeit ist die selektive Abtrennung des Wasserstoffs, z.B. durch Einsatz geeigneter Membranen mit spezifischer Wasserstoffdurchlässigkeit. Das Auftreten von Restkohlenwasserstoffen im Reformat kann zudem durch geeignete Steuerung des Umsatzes im Reformierungsreaktor 4 vermieden werden.

Solange die solchermaßen aufgebaute Reformaterzeugungseinrichtung 2 störungsfrei arbeitet, liefert sie somit ausgangsseitig ein im wesentlichen aus reinem Wasserstoff bestehendes Reformat, in welchem andere Bestandteile nicht mehr in für die Brennstoffzellenanordnung 1 schädlichen Mengen enthalten sind. Dieses wasserstoffreiche Reformat ist der Brennstoffzellenanordnung 1 über eine Reformateinspeiseleitung 7 zuführbar, in welcher ein ansteuerbares 3-Wege-Ventil 8 liegt. In der Brennstoffzellenanordnung 1 wird dann zur Stromgewinnung das im wesentlichen aus Wasserstoff bestehende Reformat mit Sauerstoff umgesetzt, welcher der Brennstoffzellenanordnung 1 kathodenseitig über eine Sauerstoffeinspeiseleitung 9 zugeführt wird, in der sich ein ansteuerbares Zuluftregelventil 29 befindet. Über die Einspeiseleitung 9 kann der Sauerstoff z.B. in Form von Kompressorluft zugeführt werden. Das Reaktionsprodukt wird über eine Auslaßleitung 10 nach außen abgeführt, während die von der Brennstoffzellenanordnung 1 durch diesen Prozeß erzeugte elektrische Energie an entsprechenden elektrischen Ausgangsleitungen 11 anliegt.

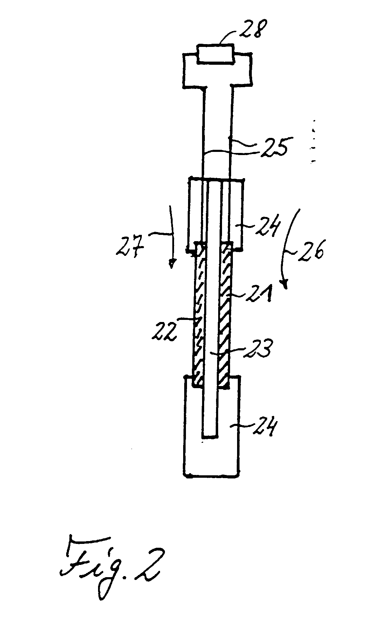

Zur Überwachung der Qualität des in der Reformaterzeugungseinrichtung 2 gewonnenen Reformats hinsichtlich Verwendbarkeit in der Brennstoffzellenanordnung 1 sind an unterschiedlichen Stellen im Reformatströmungsweg Reformatqualitätsensoren vorgesehen, und zwar ein erster solcher Sensor 12 zwischen dem Reformierungsreaktor 4 und der ausschließenden Reformatreinigungsstufe 5, ein zweiter Sensor 13 zwischen den beiden Reformatreinigungsstufen 5, 6 und ein dritter Sensor 14 an der Austrittsseite der strömungsabwärtigen Reformatreinigungsstufe 6. Der Aufbau dieser drei Reformatqualitätssensoren 12, 13, 14 ist in Fig. 2 veranschaulicht. Die dort gezeigte Struktur der Sensoren entspricht derjenigen einer einzelnen Brennstoffzelle, von denen eine Vielzahl in der Brennstoffzellenanordnung 1 verwendet wird. Der Sensor beinhaltet zwei parallele Elektroden 21, 22, die an gegenüberliegenden Außenflächen einer ionenleitenden Membran 23 angebracht sind. Die beiden Elektroden 21, 22 können auch in einem ionenleitenden Elektrolyten angeordnet sein. Dieser Komplex ist in einem Gehäuse 24 untergebracht, aus dem elektrische Anschlußleitungen 25 herausgeführt sind, die mit den Elektroden 21, 22 kontaktiert sind. Eine erste, als Anode fungierende Elektrode 21 wird dem Reformatstrom 26 ausgesetzt, während die andere, als Kathode fungierende Elektrode 22 mit Luft 27 oder reinem Sauerstoff beaufschlagt wird.

Damit funktioniert der gemäß Fig. 2 aufgebaute Sensor als Brennstoffzelle, die bei Anwesenheit von Wasserstoff im Reformat elektrische Energie erzeugt, die an den Anschlußleitungen 25 abgenommen werden kann. Da der Sensor eine vergleichbare Elektrodenstruktur besitzt wie der Brennstoffzellenstapel in der Brennstoffzellenanordnung 1, ist er in seiner Leistung in gleicher Weise von der Reformatqualität abhängig wie die Brennstoffzellenanordnung 1 selbst. Dies betrifft vor allem die wichtigen Störfaktoren Kohlenmonoxid und Methanol, jedoch auch alle anderen, für die Brennstoffzellenanordnung 1 schädlichen Reformatbestandteile, auch wenn diese eventuell noch gar nicht als solche bekannt sein sollten. Besonders vorteilhaft ist es, den Luft- bzw. Sauerstoffstrom 27 für den Sensor von der Sauerstoffeinspeiseleitung 9 der Brennstoffzellenanordnung abzuzweigen. In diesem Fall überwacht der Sensor gleichzeitig die Kathodenzuluft für die Brennstoffzellenanordnung 1. Der Sensor reagiert dann unmittelbar wie die Zellen der Brennstoffzellenanordnung 1. Damit erlaubt dieser Sensoraufbau die zuverlässige Überwachung der Reformatqualität hinsichtlich Eignung in der Brennstoffzellenanordnung 1. Um zu erreichen, daß der Sensor empfindlicher als die Brennstoffzellenanordnung 1 selbst reagiert, wird er in spezieller Weise betrieben, wozu insbesondere folgende Varianten in Betracht kommen.

Bei einer ersten Betriebsweise, wie sie in Fig. 2 veranschaulicht ist, wird ein konstanter elektrischer Verbraucher 28 zwischen die beiden Elektroden 21, 22 geschaltet, und mittels nicht gezeigter Strom- und/oder Spannungsmesser werden entweder der durch den Verbraucher 28 fließende Strom, die über ihm abfallende Spannung oder beide Größen quantitativ erfaßt. Dadurch können schon geringfügige Veränderungen der Reformatqualität detektiert werden, was in der Brennstoffzellenanordnung 1 selbst nicht so einfach möglich ist. Der elektrische Verbraucher 28 kann beispielsweise eine Leuchtdiode sein, deren Betriebszustand überwacht wird.

Eine zweite Sensorbetriebsweise besteht darin, mittels einer externen Potentiostatenschaltung über die Zellelektroden 21, 22 eine konstante Spannung anzulegen und die sich dadurch einstellende Stromstärke zu messen. Die Spannung wird so eingestellt, daß der elektrische Strom aus der Umsetzung von Wasserstoff an der Anode 21 resultiert und deshalb sehr empfindlich auf die Reformatqualität reagiert. Alternativ kann die Sensorspannung auch so eingestellt werden, daß sowohl Wasserstoff als auch Kohlenmonoxid im Sensor umgesetzt werden. Diese Maßnahme ist insbesondere für den Betrieb des an der Ausgangsseite des Reformierungsreaktors 4 gelegenen Sensors 12 günstig, da dort stromaufwärts der Reformatreinigungseinheit 5, 6 neben Wasserstoff noch vergleichsweise viel Kohlenmonoxid, z.B. zwischen 1 % und 3 %, im Reformat vorliegt. Ein noch exakterer Sensorbetrieb kann durch zusätzliches Einbringen einer Bezugselektrode auf der Luftseite der Sensorzelle verwirklicht werden. Bei dieser Bezugselektrode kann es sich um einen von der Kathode 22 elektrisch abgetrennten, ansonsten gleich aufgebauten Elektrodenbereich handeln, der nicht stromdurchflossen ist und damit als sogenanntes Luftelement eine konstante Bezugsspannung zur Verfügung stellt.

Anstelle des gezeigten Sensoraufbaus mit Brennstoffzellenstruktur können auf Wunsch auch andere Sensorbauarten als Reformatqualitätssensoren verwendet werden, beispielsweise spezielle CO-Sensoren, mit denen dann die Reformatqualität speziell hinsichtlich des CO-Anteils überwacht wird.

Wieder auf Fig. 1 bezugnehmend, ist daraus zu erkennen, daß die Ausgangssignale der drei Reformatqualitätssensoren 12, 13, 14 einer Anlagensteuereinheit 15 zugeführt werden, der außerdem über eine diesbezügliche Eingangsleitung 16 eine Information über den jeweiligen Zustand der Brennstoffzellenanordnung 1 zugeführt wird. Außerdem empfängt die Steuereinheit 15 das Ausgangssignal eines Sensors 17, der die Zusammensetzung des Methanol/Wasser-Gemischs vor Eintritt in den Reformierungsreaktor 4 überwacht und auf diese Weise eine Anlagenüberwachungskomponente im Vorfeld der Reformaterzeugung bildet. Dieser Sensor 17 kann beispielsweise ein herkömmlicher Brechungsindex-Sensor sein, mit dem sich der Brechungsindex des zu reagierenden Gasgemischs in der Dampfphase oder im noch unverdampften, flüssigen Gemischzustand bestimmen läßt. Diese Brechungsindexinformation erlaubt die Ermittlung der jeweiligen Methanol/Wasser-Gemischzusammensetzung und liefert somit eine Aussage über den Betriebszustand der Bevorratungs- und Aufbereitungseinheit 3.

Mit den empfangenen Ausgangssignalen der verschiedenen Sensoren ist die Steuereinheit 15 somit in der Lage, sowohl den Zustand der einzelnen Komponenten der Reformaterzeugungseinrichtung 2 und damit den Zustand der letzteren insgesamt ständig daraufhin zu überwachen, ob sie ein für die Brennstoffzellenanordnung 1 geeignetes Reformat erzeugt. Sobald die Steuereinheit 15 feststellt, daß an einer sensorisch überwachten Stelle des Reformatströmungsweges bzw. des zu reagierenden Gasgemischs vor dem Reformierungsreaktor 4 aufgrund eines Fehlbetriebs eine fehlerhafte Gaszusammensetzung vorliegt, die zu Schädigungen der Brennstoffzellenanordnung 1 aufgrund ungenügender Reformatqualität führen würde, schaltet sie über eine entsprechende Steuerleitung 18 das Ventil 8 um. Dadurch wird das von der Reformaterzeugungseinrichtung 2 gelieferte Reformat, das im fehlerfreien Anlagenbetrieb vom Ventil 8 in die Brennstoffzellenanordnung 1 weitergeleitet wird, in eine Abzweigleitung 19 abgeleitet, welche die Brennstoffzellenanordnung 1 als Bypassleitung umgeht.

Auf diese Weise verhindert die Steuereinheit 15 rechtzeitig jegliches Eintreten von Reformat ungenügender Qualität in die Brennstoffzellenanordnung 1. Zusätzlich zum Unterbrechen der Reformateinspeisung in die Brennstoffzellenanordnung 1 durch Umsteuern des Ventils 8 veranlaßt die Steuereinheit 15 über eine entsprechende Steuerleitung 20 eine Abschaltung der Bevorratungs- und Aufbereitungseinheit 3, was die Reformaterzeugungseinrichtung 2 stillsetzt. Damit wird die weitere Produktion von Reformat ungenügender Qualität gestoppt, während das von der Reformaterzeugungseinrichtung 2 für eine gewisse Ansprechzeit noch gelieferte Reformat ungenügender Qualität über die Abzweigleitung 19 abgeführt wird, ohne die Brennstoffzellenanordnung 1 zu schädigen. Erst wenn wieder eine ausreichende Reformatqualität erreicht ist, schaltet die Steuereinheit 15 das Ventil 8 wieder in die normale Betriebsstellung um, um das Reformat in die Brennstoffzellenanordnung 1 einzuspeisen.

Als weitere Maßnahme regelt die Steuereinheit 15 durch entsprechende Ansteuerung des Zuluftregelventils 29 die Menge an Sauerstoff, die der Brennstoffzellenanordnung 1 kathodenseitig zugeführt wird, in Abhängigkeit von den empfangenen Sensorausgangssignalen. Dabei variiert die Steuereinheit 15 die der Brennstoffzellenanordnung 1 zugeführte Zuluftmenge insbesondere in Abhängigkeit der sensorisch erfaßten CO-Konzentration im Reformatgas derart, daß kurzzeitige höhere CO-Konzentrationen für die Brennstoffzellenanordnung unschädlich bleiben und toleriert werden können, ohne daß in solchen Fällen die Reformatzufuhr unterbrochen werden muß.

Die Anlagensteuereinheit 15 erfüllt außerdem alle übrigen, notwendigen Anlagensteuerungsfunktionen für die verschiedenen Anlagenkomponenten, was hier nicht weiter von Interesse und daher in Fig. 1 nicht näher dargestellt ist. Alternativ kann die Steuereinheit 15 eine von der eigentlichen Anlagensteuereinheit getrennte Überwachungseinheit sein, deren Funktion auf die hier eingehend beschriebene Reformatüberwachungsfunktionalität beschränkt ist.

Durch die an mehreren Stellen des Reformatströmungsweges angeordneten Sensoren vermag die Steuereinheit 15 die jeweils ausgefallene Anlagenkomponente genau zu lokalisieren. Zudem ist die Frühwarnzeit des jeweiligen Sensors für die Steuereinheit 15 umso größer, je weiter der Sensor stromaufwärts von der Brennstoffzellenanordnung 1 entfernt ist, so daß umso früher das Ventil 8 zwecks Unterbrechung der Reformateinspeisung in die Brennstoffzellenanordnung 1 und Abführen des Reformats in die Abzweigleitung 19 umgeschaltet werden kann. Je näher andererseits der Sensor vor der Brennstoffzellenanordnung 1 liegt, umso vollständiger überwacht er die Reformaterzeugungseinrichtung 2.

Es versteht sich, daß zahlreiche Modifikationen der gezeigten Anlage im Rahmen der Erfindung realisierbar sind. So kann bei entsprechend geänderter Auslegung der Anlage statt Methanol ein anderer Kohlenwasserstoff zur Wasserstoffgewinnung verwendet werden, wobei die Reformaterzeugungseinrichtung 2 einen für den jeweiligen Anwendungsfall geeigneten, herkömmlichen Aufbau besitzt. Wenn dies wünschenswert erscheint, können weniger als die vier gezeigten Sensoren zum Einsatz kommen, solange wenigstens ein Sensor im Reformatströmungsweg vorhanden ist. Die erfindungsgemäße Anlage eignet sich sowohl für mobile Anwendungen, beispielsweise in Kraftfahrzeugen, als auch für stationäre Einsatzfälle.

## Patentansprüche

1. Brennstoffzellen-Energieerzeugungsanlage mit
- einer Reformaterzeugungseinrichtung (2), die einen Kohlenwasserstoff-Reformierungsreaktor (4) beinhaltet und ein wasserstoffreiches Reformat erzeugt,
- einer Brennstoffzellenanordnung (1), der eintrittseitig das von der Reformaterzeugungseinrichtung erzeugte Reformat über eine Reformateinspeiseleitung (7) zuführbar ist,
- wenigstens einem im Reformatströmungsweg angeordneten, reformatqualitätsindikativen Sensor (12, 13, 14, 17) und
- eine Steuereinheit (15),
gekennzeichnet durch
ein Zuluftregelventil (29) kathodenseitig in einer Luft- bzw. Sauerstoffeinspeiseleitung (9) der Brennstoffzellenanordnung (1), das von der Steuereinheit (15) in Abhängigkeit vom Ausgangssignal des wenigstens einen reformatqualitätsindikativen Sensors (12, 13, 14, 17) ansteuerbar ist.

2. Brennstoffzellen-Energieerzeugungsanlage nach Anspruch 1,
dadurch gekennzeichnet,
daß zusätzlich ein Ventil (8) in der Reformateinspeiseleitung (7), das von der Steuereinheit (15) derart ansteuerbar ist, daß es die Einspeisung des von der Reformaterzeugungseinrichtung (2) abgegebenen Reformats in die Brennstoffzellenanordnung (1) in Abhängigkeit vom Ausgangssignal des wenigstens einen reformatqualitätsindikativen Sensors (12, 13, 14, 17) freigibt oder unterbricht.

3. Brennstoffzellen-Energieerzeugungsanlage nach einem der Ansprüche 1 bis 2,
dadurch gekennzeichnet,
daß wenigstens je ein reformatqualitätsindikativer Sensor (12, 14) an der Eintrittsseite und der Austrittsseite einer dem Reformierungsreaktor (4) nachgeschalteten Reformatreinigungseinheit (5, 6) der Reformaterzeugungseinrichtung (2) vorgesehen ist.

4. Brennstoffzellen-Energieerzeugungsanlage nach einem der Ansprüche 1 bis 3,
dadurch gekennzeichnet,
daß die Brennstoffzellenanordnung (1) aus einer Mehrzahl von gleichartigen Brennstoffzellen besteht und wenigstens einer der reformatqualitätsindikativen Sensoren (12, 13, 14) die Struktur einer einzelnen solchen Brennstoffzelle besitzt.

5. Brennstoffzellen-Energieerzeugungsanlage nach einem der Ansprüche 1 bis 4,
dadurch gekennzeichnet,
daß einer der reformatqualitätsindikativen Sensoren ein Sensor (17) zur Erfassung der Zusammensetzung des zu reformierenden Gasgemischs ist, der auf der Eintrittsseite des Reformierungsreaktors (4) angeordnet ist.

6. Brennstoffzellen-Energieerzeugungsanlage nach einem der Ansprüche 1 bis 5,
dadurch gekennzeichnet,
daß wenigstens einem der die Struktur einer einzelnen Brennstoffzelle der Brennstoffzellenanordnung (1) besitzenden, reformatqualitätsindikativen Sensoren (12, 13, 14) kathodenseitig ein sauerstoffhaltiger Gasstrom zugeführt ist, der aus einer Luft- bzw. Sauerstoffeinspeiseleitung (9) der Brennstoffzellenanordnung (1) abgezweigt ist.

## Claims

1. A fuel cell energy-generating system having
- a reforming gas generator device (2) which contains a hydrocarbon reforming reactor (4) and produces a reforming gas rich in hydrogen,
- a fuel cell array (1), to the inlet side of which the reforming gas produced by the reforming gas generator can be delivered via a reforming gas supply line (7),
- at least one sensor (12, 13, 14, 17) indicative of the quality of the reforming gas, arranged in the flow path of the reforming gas and
- a control unit (15),
characterised by
an air-admission control valve (29) on the cathode side opening into an air or oxygen supply line (9) of the fuel cell array (1), which can be controlled by the control unit (15) depending on the output signal of the at least one sensor (12, 13, 14, 17) indicating the quality of the reforming gas.

2. A fuel cell energy-generating system as claimed in claim 1, characterised in that
it has in addition, a valve (8) in the reforming gas supply line (7), which can be controlled by the control unit (15) so that it keeps open or shuts off admission of the reforming gas from the reforming gas generator (2) into the fuel cell array (1) depending on the output signal of the at least one sensor (12, 13, 14, 17) indicating the quality of the reforming gas.

3. A fuel cell energy-generating system as claimed in one of claims 1 to 2,
characterised in that
at least one sensor (12, 14) indicative of the reforming gas quality is provided respectively on the inlet side and the outlet side of the reforming gas cleaning unit (5, 6) of the reforming gas generator (2) connected downstream of the reforming reactor (4).

4. A fuel cell energy-generating system as claimed in one of claims 1 to 3,
characterised in that
the fuel cell array (1) consists of a plurality of fuel cells of the same type and at least one of the sensors (12, 13, 14) is of the same construction as one of these individual fuel cells.

5. A fuel cell energy-generating system as claimed in one of claims 1 to 4,
characterised in that
one of the sensors indicating the quality of the reforming gas is a sensor (17) for detecting the composition of the gas mixture to be reformed, being arranged on the inlet side of the reforming reactor (4).

6. Fuel cell energy-generating system as claimed in one of claims 1 to 5,
characterised in that a flow of gas containing oxygen is delivered to the cathode side of one of the sensors (12, 13, 14) indicative of the reforming gas quality and having the same structure as one of the individual fuel cells of the fuel cell array (1), branching off from an air or oxygen supply line (9) of the fuel cell array (1).

## Revendications

1. Dispositif de production d'énergie par piles à combustible, comprenant
- un reformeur (2), qui contient un réacteur de reformage des hydrocarbures (4) et produit un reformat riche en hydrogène,
- un système de piles à combustible (1), dans lequel, par l'intermédiaire d'une conduite d'admission du reformat (7), il est possible d'acheminer du côté de l'entrée un reformat produit avec le reformeur,
- au moins un capteur (12, 13, 14, 17) indiquant la qualité du reformat, monté dans le trajet d'écoulement du reformat, et
- une unité de commande (15)
caractérisé par
une vanne de régulation de l'admission d'air (29), montée du côté de la cathode dans une conduite d'admission (9) d'air ou d'oxygène du système de piles à combustible (1), laquelle vanne peut être commandée par l'unité de commande (15) en fonction ou signal de sortie ou capteur (12, 13, 14, 17) indiquant la qualité du reformat, au moins au nombre d'un.

2. Dispositif de production d'énergie par piles à combustible selon la revendication 1, caractérisé en ce qu'il est prévu, en plus, une vanne (8) montée dans la conduite d'admission du reformat (7), qui peut être commandée par l'unité de commande (15), de telle sorte que ladite vanne ouvre ou interrompt l'admission du reformat, acheminé à partir du reformeur (2), dans le système de piles à combustible (1) en fonction du signal de sortie du capteur (12, 13, 14, 17) indiquant la qualité du reformat, au moins au nombre d'un.

3. Dispositif de production d'énergie par piles à combustible selon l'une quelconque des revendications 1 à 2, caractérisé en ce qu'il est prévu de monter au moins un capteur (12, 14) indiquant la qualité du reformat respectivement du côté de l'entrée et du côté de la sortie d'une unité de lavage du reformat (5, 6) montée en aval du réacteur de reformage (4) contenu dans le reformeur (2).

4. Dispositif de production d'énergie par piles à combustible selon l'une quelconque des revendications 1 à 3, caractérisé en ce que le système de piles à combustible (1) est formé par une pluralité de piles à combustible identiques et au moins l'un des capteurs (12, 13, 14) indiquant la qualité du reformat présente la structure d'une telle pile à combustible indépendante.

5. Dispositif de production d'énergie par piles à combustible selon l'une quelconque des revendications 1 à 4, caractérisé en ce que l'un des capteurs indiquant la qualité du reformat est un capteur (17) destiné à mesurer la composition du mélange de gaz à reformer, qui est monté du côté d'admission du réacteur de reformage (4).

6. Dispositif de production d'énergie par piles à combustible selon l'une quelconque des revendications 1 à 5, caractérisé en ce qu'un flux de gaz contenant de l'oxygène est acheminé du côté de la cathode vers l'un des capteurs (12, 13, 14), indiquant la qualité du reformat, qui présente la structure d'une pile à combustible indépendante du système de piles à combustible (1), lequel flux de gaz est introduit à partir d'une conduite d'admission d'air ou d'oxygène (9) du système de piles à combustible (1).
